# EUROPEAN PATENT APPLICATION

(11) **EP 1 698 595 A1**
(43) Date of publication of application: **06.09.2006**
(21) Application number: 04818940.1
(22) Date of filing: 18.11.2004
(51) Int. Cl.: C02F 11/14, C02F 11/04, C02F 3/12, C02F 3/34

(54) **METHOD OF FORMATION/RECOVERY OF MAGNESIUM AMMONIUM PHOSPHATE AND APPARATUS THEREFOR**

(30) Priority: 21.11.2003 JP 2003391962
(71) Applicant: EBARA CORPORATION, Ohta-ku, Tokyo 144-8510 (JP)
(72) Inventor: HAGINO, Takao, c/o Ebara Corporation,, Tokyo 144-8510 (JP); FUCHU, Yuichi, c/o Ebara Corporation,, Tokyo 144-8510 (JP); IKEDA, Noriko, c/o Ebara Corporation,, Tokyo 144-8510 (JP)
(74) Representative: Wagner, Karl H.
(86) International application number: PCT/JP2004/017136
(87) International publication number: WO 2005/049511

(57) **Abstract**

It is an object to provide, among organic wastewater biological treatment systems, a method and apparatus according to which phosphorus and so on is efficiently recovered as MAP crystals from wastewater containing organic matter, phosphorus and nitrogen, and the biological denitrification/dephosphorization treatment performance is greatly improved. The present invention relates to a method of treating sludge generated in an organic wastewater biological treatment process using microbial metabolism, the sludge treatment method being **characterized by** subjecting the sludge to biological treatment comprising mainly acid fermentation by facultative anaerobic bacteria so as to leach phosphate ions and ammonium ions out from the sludge, and adding a magnesium source to the sludge so as to produce magnesium ammonium phosphate particles from the leached out phosphate ions and ammonium ions, and then separating the magnesium ammonium phosphate particles from the magnesium ammonium phosphate particle-containing sludge thus produced, and relates to an apparatus for implementing the method.

## Description

### TECHNICAL FIELD

The present invention relates to a system for treating organic wastewater in a sewage treatment plant or any of various wastewater treatment facilities or the like, and more particularly relates to a method and apparatus for efficiently recovering phosphorus and so on as magnesium ammonium phosphate (also known as the acronym "MAP"; chemical formula MgNH₄PO₄·6H₂O) crystals from wastewater containing phosphorus and nitrogen.

### BACKGROUND ART

As we have entered the 21st century, there has been an increasing need in wastewater treatment technology to not merely purify water but rather also recover the purified water as a resource. Amid this state of affairs, technology for removing and recovering phosphorus from organic wastewater such as sewage has been born.

As phosphorus removal methods, chemical flocculating settling methods have been developed and made practicable, and a track record of results has been obtained, but due to the cost of the chemical and the generation of large amounts of sludge, there has been a tendency to shy away from introduction at actual facilities. Entering the 1970s, anaerobic-aerobic methods focusing on excess phosphorus uptake in activated sludge, and methods whose objective is to remove nitrogen at the same time as phosphorus were developed and made practicable as biological phosphorus removal methods. Of these, an anaerobic-anoxic-aerobic method cleverly utilizes the metabolic action of microbes, whereby a large amount of phosphorus can be accumulated in the cells of the multiplying microbes, and hence this method has become widely used in Japan. However, with the anaerobic-anoxic-aerobic method, there are problems such as the treatment performance not being stable upon changes in water quality or changes in external environment with the changing seasons, and in such cases, a method in which this is combined with a flocculating settling method or the like may be required. As a result, there have been problems that the treatment process becomes complex, and running costs such as the costs of chemicals are high.

Meanwhile, regarding attempts to recover phosphorus from wastewater, in the 1970s, a crystallization method and a contact dephosphorization method in which phosphorus is precipitated out as apatite phosphate were developed. In recent years, a MAP crystallization method that targets, for example, anaerobic digestion separated liquid or fed back water generated in a human waste treatment or sewage treatment process has been trialed. The MAP crystallization method uses the phenomenon that MgNH₄PO₄·6H₂O crystals (MAP crystals) are produced through equimolar reaction between phosphate ions, ammonium ions and magnesium ions in water. The MAP crystal production reaction is shown in the following formula.

[Formula 1]

PO₄³⁻ + NH₄⁺ + Mg²⁺ + 6H₂O → MgNH₄PO₄ · 6H₂O (1)

With general sewage sludge, the phosphate ion and ammonium ion concentrations are generally higher than the magnesium ion concentration, but by adding magnesium ions to such wastewater, and making the pH be from around neutral to alkaline, MAP crystals are produced. By removing the grown MAP crystal grains from the reaction system, phosphorus can be removed from the wastewater, and moreover some of the ammonium ions can be removed.

For the MAP crystallization method, the degree of complexity of operation is low, and in particular recovery of phosphorus can be carried out stably. The recovered MAP contains 13% of phosphorus by weight, and has added value as an excellent fertilizer, and hence the method is an excellent phosphorus/nitrogen removal/recovery technique in terms of effective utilization of resources.

However, even in the case of the MAP crystallization method, there are problems such as: (1) the cost of chemicals such as sodium hydroxide as a pH regulator and magnesium chloride added as an Mg source is high; (2) if MAP is crystallized rapidly with a short residence time of approximately 30 minutes (hereinafter referred to as a "rapid MAP reaction"), then very fine MAP particles are produced, and hence very fine MAP particles are discharged in the treated water flowing out from the MAP reaction tank, and thus the MAP recovery rate is reduced to approximately 60 to 70%; (3) with the rapid MAP reaction, if more than approximately 1000 mg/L of SS is present in the liquid, then the SS gets intermixed with the MAP crystals, and hence high-purity MAP crystals cannot be recovered; (4) in the case of using an anaerobic digestion step in a stage before the MAP treatment step, the MAP reaction takes place beforehand in the anaerobic digestion step; it is thus difficult to separate the produced MAP particles from organic SS as is, and hence the MAP particles are not recovered but rather are disposed of in a state mixed into the sludge.

To resolve the above problems of the prior art, the present inventors thus proposed art for efficiently recovering phosphorus in wastewater as MAP (see Japanese Patent Application Laid-open No. 2002-45889, International Patent Application No. PCT/JP03/04909). That is, the present inventors have proposed an organic wastewater treatment method and treatment apparatus having a step of carrying out anaerobic digestion treatment on excess sludge generated in an organic wastewater treatment process (in general, this means a mixture of initially settled sludge deposited and separated in an initial settling basin, and excess sludge comprising activated sludge deposited and separated in a final settling basin minus fed back sludge), and supplying in a magnesium source in this step so as to actively produce MAP in the reaction tank, and separating from the digested sludge and thus recovering produced MAP. By implementing this method, the recovery rate of phosphorus from wastewater can be greatly increased.

### DISCLOSURE OF THE INVENTION

### PROBLEMS TO BE SOLVED BY THE INVENTION

However, with the above art, although there are the merits that the cost of chemicals is reduced and a special reactor is not required, there has been the problem that a long reaction time of approximately 25 days is required. The present inventors thus carried out further studies, and as a result for a wastewater treatment system that does not presuppose anaerobic digestion treatment of sludge in particular, have established art for efficiently recovering phosphorus in sludge or wastewater as MAP.

It is an object of the present invention to resolve the problems of the prior art described above. That is, it is an object of the present invention to provide, among organic wastewater treatment systems, a method and apparatus according to which phosphorus and so on is recovered efficiently as MAP crystals from wastewater containing phosphorus and nitrogen, and moreover the biological denitrification/dephosphorization method treatment performance is greatly improved. In other words, it is an object of the present invention to provide an organic wastewater treatment system that is practical, and according to which the cost of chemicals is inexpensive, and moreover the reaction time for phosphorus recovery is reduced.

### MEANS FOR SOLVING THE PROBLEMS

In the conventional MAP recovery art, although there are the merits that the cost of chemicals is reduced and a special reactor is not required, there is a drawback that a long reaction time of approximately 25 days is required. To eliminate this drawback, the present inventors carried out further studies and contrivances, and as a result for a wastewater treatment system that does not presuppose anaerobic digestion treatment of sludge, have succeeded in establishing art for efficiently recovering phosphorus in sludge or wastewater as granular MAP of grain size 300 to 1000 µm.

According to the present invention, the above object can be attained through the following means.

1. A method of treating sludge generated in an organic wastewater biological treatment process using microbial metabolism, the sludge treatment method being characterized by subjecting the sludge to biological treatment comprising mainly acid fermentation by facultative anaerobic bacteria so as to leach phosphate ions and ammonium ions out from the sludge, and adding a magnesium source to the sludge so as to produce magnesium ammonium phosphate particles from the leached out phosphate ions and ammonium ions, and then separating the magnesium ammonium phosphate particles from the magnesium ammonium phosphate particle-containing sludge thus produced.

2. The sludge treatment method according to above item 1, having (A) a step of leading the sludge to a dewatering step after the magnesium ammonium phosphate particles have been separated off, and/or (B) a step of returning the sludge to the organic wastewater biological treatment process after the magnesium ammonium phosphate particles have been separated off, and dewatering sludge generated in the organic wastewater biological treatment process.

3. The sludge treatment method according to above item 1 or 2, wherein the magnesium ammonium phosphate particles separated from the magnesium ammonium phosphate particle-containing sludge, or the sludge after the magnesium ammonium phosphate particles have been separated therefrom is returned to the magnesium ammonium phosphate particle production step.

4. An apparatus for treating sludge generated in an organic wastewater biological treatment process using microbial metabolism, the sludge treatment apparatus being characterized by comprising: a phosphate/ammonium ion leaching / magnesium ammonium phosphate production tank for subjecting the sludge to biological treatment comprising mainly acid fermentation by facultative anaerobic bacteria so as to leach phosphate ions and ammonium ions out from the sludge, and adding a magnesium source to the sludge so as to produce magnesium ammonium phosphate particles from the leached out phosphate ions and ammonium ions; and a separating apparatus for separating the magnesium ammonium phosphate particles from the magnesium ammonium phosphate particle-containing sludge produced in the phosphate/ammonium ion leaching / magnesium ammonium phosphate production tank.

5. The apparatus according to above item 4, having feeding back means for returning magnesium ammonium phosphate particle-removed sludge obtained from the separating apparatus into the phosphate/ammonium ion leaching / magnesium ammonium phosphate production tank.

### EFFECTS OF THE INVENTION

Among organic wastewater treatment systems, in particular systems for recovering phosphorus from wastewater containing organic matter, phosphorus and nitrogen, the present invention achieves effects as follows.
(1) Phosphorus can be recovered as high-purity MAP. Specifically, phosphorus can be recovered as MAP of purity at least 70%, the maximum purity being 92%.
(2) Much of the phosphorus contained in the organic matter, specifically at least 35%, can be recovered.
(3) The present invention can be applied even to a treatment system in which anaerobic digestion treatment of sludge (with a residence time of approximately 25 days) is not used. Furthermore, with a system in which a sludge digestion tank is already installed, the present invention results in production of MAP in the digestion tank being suppressed, and hence maintenance of the digestion tank becomes easier.
(4) The amount of chemicals used is lower than with a conventional MAP recovery apparatus (the reason for this is that the reaction is made to proceed in a neutral pH region, and hence addition of an alkali can be kept down to a minimum).
(5) The biological denitrification/dephosphorization treatment performance is improved.
(6) The amount of sludge discharged from a biological treatment system can be reduced.
(7) In the case that the dewatered cake is incinerated/melted, fly ash trouble caused by phosphorus can be avoided.

### BRIEF DESCRIPTION OF THE DRAWINGS

[FIG. 1] A flowchart of an embodiment of a treatment apparatus of the present invention;
[FIG. 2] A flowchart of another embodiment of the treatment apparatus of the present invention;
[FIG. 3] A flowchart of an embodiment described in Japanese Patent Application No. 2000-231633; and
[FIG. 4] A flowchart of an embodiment of a conventional treatment apparatus.

Numbers in each of Drawings denote the followings.
- 1.: inflowing water
- 2.: supernatant water from initial settling basin
- 3.: outflow water
- 4.: treated water
- 5.: initially settled sludge
- 6.: excess sludge
- 7.: concentrated sludge
- 8.: outflow water from phosphate/ammonium ion leaching and MAP production tank
- 9.: recovered MAP
- 10.: MAP-separated sludge
- 11.: initial settling basin
- 12.: biological water treatment reaction tank
- 13.: final settling tank
- 14.: outflow water
- 15.: fed back sludge
- 21.: sludge concentrating apparatus
- 22.: phosphate/ammonium ion leaching and MAP production tank
- 23.: MAP separation recovery apparatus
- 24.: sludge dewatering apparatus
- 25.: MAP production tank
- 31.: filter cake
- 32.: filtrate

### BEST MODE FOR CARRYING OUT THE INVENTION

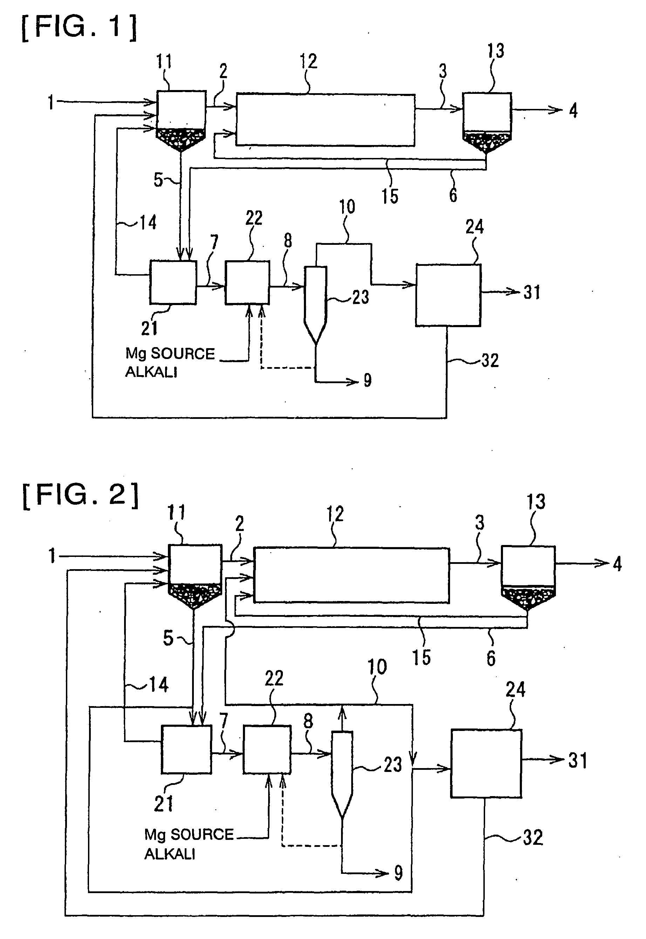

Embodiments of the present invention will now be described with reference to FIGS. 1 and 2. FIGS. 1 and 2 each show an embodiment of the present invention, but the present invention is not limited to these embodiments. Note that "excess sludge" in the present invention refers to all of the sludge generated in the organic wastewater treatment process.

The organic wastewater (inflowing water) 1 is introduced into an initial settling basin 11, and suspended matter that readily settles is deposited and removed. After the solid-liquid separation, the supernatant water 2 is led into biological water treatment reaction tanks 12, and BOD, nitrogen, phosphorus and so on are purified out. The biological water treatment reaction tanks 12 are generally provided with an air supply supply apparatus for supplying oxygen required for the activity of aerobic microbes. There may be a single biological water treatment reaction tank 12, but in general there are preferably a plurality of biological water treatment reaction tanks 12. In wastewater treatment in recent years, methods have been implemented in which not only BOD but also nitrogen and phosphorus are purified out efficiently. Specifically, some of the tanks are made to be in an anaerobic state and means for artificially controlling biological metabolism is adopted, this control means being known as the circulation type nitrification denitrification method, the anaerobic-anoxic-aerobic method or the like. In the present invention, anaerobic-anoxic-aerobic tanks of such a form can be used as the biological water treatment reaction tanks 12.

The outflow water 3 from the biological water treatment reaction tanks 12 is introduced into a final settling basin 13, and subjected to solid-liquid separation. The supernatant water after the solid-liquid separation is discharged from the system as treated water 4. Some of the sludge from the solid-liquid separation is returned into the biological water treatment reaction tanks 12 as fed back sludge 15, whereby the amount of bacteria in the biological water treatment reaction tanks 12 is maintained. The remaining sludge is fed as excess sludge 6 into a sludge concentrating apparatus 21 together with initially settled sludge 5 from the solid-liquid separation in the initial settling basin 11.

The sludge concentrating apparatus 21 may be of a settling type or a mechanical concentration type, and furthermore may be of a type in which a chemical is added so long as this chemical does not bond to soluble phosphorus or ammonia; basically, so long as the initially settled sludge 5 and the excess sludge 6 can be concentrated, there are no particular limitations. The concentrated sludge 7 thus obtained is introduced into a phosphate/ammonium ion leaching / MAP production tank 22. The concentrated sludge 7 may be introduced into the phosphate/ammonium ion leaching / MAP production tank 22 after having been subjected to ultrasound treatment or ozone treatment.

General sludge decomposition under anaerobic conditions can be understood divided into two stages. In the first stage, first hydrolysis of macromolecular organic matter occurs, whereby monosaccharides, amino acids and so on are produced, and these are decomposed into organic acids, alcohols, H₂, CO₂ and so on (acid fermentation). After that, entering the second stage, reaction by strictly anaerobic bacteria occurs.

When organic matter in the sludge is decomposed by acid fermentation into organic acids such as acetic acid and propionic acid, leaching out of phosphorus and ammonia occurs. The leaching out of the phosphorus is due to release of phosphoric acid through hydrolysis, solubilization of calcium phosphate by acidic metabolites (organic acids, nitric acid, sulfuric acid), dissolution of ferric phosphate by hydrogen sulfide, and so on. Moreover, the leaching out of the ammonia is due to ammonia release accompanying decomposition of protein by facultative anaerobic bacteria, i.e. ammonia production through decarboxylation and deamination from amino acids produced through protein decomposition, and so on.

In the phosphate/ammonium ion leaching / MAP production tank 22 (hereinafter sometimes referred to merely as the "reaction tank 22"), biological treatment comprising mainly acid fermentation by facultative anaerobic bacteria is carried out. That is, phosphorus and ammonia are leached out from the sludge through the first stage of organic matter decomposition by facultative anaerobic bacteria, i.e. means such as acid fermentation, and together with this MAP is synthesized from the phosphate ions and ammonium ions produced; this is the kernel of the method of the present invention.

Whereas the growth of strictly anaerobic methane bacteria is very slow, the growth of facultative anaerobic bacteria is fast; compared with methane fermentation for which the residence time is approximately 20 days, the treatment can thus be carried out in a short time of approximately 2 hours to 7 days, preferably 5 to 60 hours. Note that there are cases in which some strictly anaerobic bacteria arise among the facultative anaerobic bacteria depending on the aeration conditions and the temperature conditions in the reaction tank 22, and these strictly anaerobic bacteria also participate in the phosphate/ammonium ion leaching reaction; nevertheless, the reaction tank 22 is used assuming that the phosphate/ammonium ions are leached out basically by facultative anaerobic bacteria.

In the present invention, "biological treatment comprising mainly acid fermentation by facultative anaerobic bacteria is carried out" means that "treatment by strictly anaerobic bacteria is not the main process", and can be explained as follows. With normal anaerobic digestion treatment in a digestion tank with a residence time of approximately 25 days, strictly anaerobic methane producing bacteria are mainly present and hence organic acids such as propionic acid are decomposed into methane, whereas in the present process, because the residence time is relatively short and aeration is carried out as required, it is thought that the main microbe group is facultative anaerobic bacteria. Nevertheless, depending on the operating conditions, it can be envisaged that some strictly anaerobic bacteria such as methane producing bacteria will also arise. The above expression "treatment by strictly anaerobic bacteria is not the main process" has been used in this sense. In other words, this could also be expressed as "an anaerobic treatment process using substantially only strictly anaerobic bacteria is not included". The purpose of the treatment system using the present reaction tank is ultimately to "decompose organic matter so as to increase the amount of organic acids and soluble phosphorus", and is not to further decompose the organic acids produced so as to generate methane. Note, however, that methane may be produced by the some strictly anaerobic bacteria that arise, with this not being a problem. The reason for this is that methane fermentation proceeds in the direction of promoting leaching out of phosphate/ammonium ions, and does not impede MAP production whatsoever.

To improve the efficiency of the organic matter decomposition in the present invention, of course a pH regulator may be added as required, and temperature adjustment, a suitable degree of stirring, a suitable degree of aeration, and so on may be carried out.

Furthermore, as the method of leaching out the phosphate/ammonium ions, physicochemical treatment such as electrochemical treatment or treatment with ultrasound or ozone as used in sludge reduction may be adopted, or a biological reaction such as acid fermentation and such a physicochemical reaction may be used in combination.

In this way, phosphorus in the form of SS (suspended solid) and nitrogen in the form of SS that have been taken into the sludge can be converted into a dissolved state of phosphate phosphorus and ammonia nitrogen. At the same time, the conditions in the reaction tank 22 are adjusted such that high-purity MAP with good separability is produced in the sludge in the reaction tank 22. Specifically, addition of an Mg source such as magnesium hydroxide or magnesium chloride, gentle stirring for making the MAP crystals grow, and moreover circulating back as seed crystals some of the MAP 9 recovered in a later stage may be implemented.

So that the organic acids such as acetic acid and propionic acid are produced in a large amount during the acid fermentation, an alkaline component may be supplied in so as to prevent a drop in the efficiency of the acid fermentation due to a lack of alkaline components. The magnesium hydroxide mentioned above is such an alkali source, and is also an Mg source used in the MAP production reaction, and hence has a double effect. Moreover, in a conventional MAP dephosphorization method, an alkali or the like is often added to maintain the pH in a range of 8.0 to 9.0, but for the present process a pH of approximately 7.0 is assumed, and hence the amount used of a chemical such as a pH regulator can be reduced.

The Mg added produces MAP in an equimolar amount relative to the phosphate ions contained in the sludge that has been subjected to the acid fermentation, and hence as the amount of Mg added, a range from an equimolar amount relative to the phosphate ions to double this amount is suitable. Considering both the decrease in the amount of phosphate ions and the efficiency of use of the Mg, the optimum amount of Mg added is from 1.1 to 1.4 times the number of mols of the phosphate ions.

When adding the Mg source to produce the MAP, the pH is an important condition. In terms of both the acid fermentation and the MAP production, the acidic region is not very desirable, with alkaline being preferable. However, if the pH is too high, then the degree of supersaturation will increase, and hence the force driving crystallization will act so strongly that this may lead to production of very fine MAP particles. The pH is preferably in a range of 6.8 to 7.7, more preferably 7.1 to 7.4.

There are no particular limitations on the Mg source so long as the Mg source does not impede the acid fermentation, and is capable of bringing about the MAP reaction through addition of at least an equimolar amount of Mg²⁺ relative to the phosphate ions and the ammonium ions; a chemical, or water such as seawater, or in some cases even wastewater can be used. From the principles of crystallization, the higher the substrate concentration of phosphate and ammonium ions, the greater the amount of MAP produced. Among chemicals, magnesium chloride has a relatively high solubility, and hence can be dissolved in water and injected in with a high Mg concentration. In terms of cost, magnesium hydroxide is the cheapest, and moreover a method of directly injecting in inexpensive industrial grade magnesium hydroxide slurry is preferable in terms of both cost and operation.

When injecting in the Mg source, the Mg source can be injected directly into the acid fermentation tank. However, with this method, the Mg concentration will rise dramatically in places, and hence the degree of supersaturation of the Mg will become high, and thus MAP production will occur instantaneously; this may lead to production of very fine MAP crystals that cannot be completely recovered. Due to this situation, for the Mg injection, a method in which the Mg is mixed into the raw sludge before the raw sludge is put into the acid fermentation tank is effective, since then a rapid MAP reaction can be prevented. If a slurry of magnesium hydroxide, which has low solubility among Mg compounds, is mixed into the raw sludge before the raw sludge is injected into the acid fermentation tank, then this is effective in further increasing the MAP recovery rate. To increase the MAP recovery rate, it is preferable to return recovered MAP particles as seed crystals into the MAP production tank, thus increasing the surface area of the seed crystals onto which the MAP precipitates, whereby production of very fine MAP can be prevented. The MAP particles returned into the MAP production tank as the seed crystals preferably have a diameter of at least 150 µm, most preferably a diameter in a range of 250 to 800 µm.

Bench scale experiments of the acid fermentation / MAP production process were carried out on excess sludge from a certain sewage treatment plant, whereupon the results shown in the table below were obtained.

**[Table 1]**

| SEED CRYSTALS | BEFORE ACID FERMENTATION (IMMEDIATELY AFTER Mg ADDED) | AFTER MAP PRODUCTION |
|---|---|---|
| NH₄·N (mg/L) | 800 | 700 |
| PO₄·P (mg/L) | 200 | 50 |
| Mg (mg/L) | 170 | 50 |
| pH | 7.3 | 7.3 |
| MAP production (mg/L) | ― | 1200 |

With sludge digestion treatment using a conventional method, carbon that is a constituent of organic matter is decomposed into methane and carbon dioxide, and phosphorus and nitrogen are decomposed into phosphoric acid and ammonia nitrogen in a digestion tank with a residence time of approximately 25 days; some of the phosphoric acid and the ammonia is synthesized gradually into MAP over the residence time of 25 days in the digestion tank, whereby MAP particles having good separability have been produced. The present inventors carried out various contrivances to reduce the degree of Mg supersaturation in the reaction tank 22 into which [NH₄⁺] and [HPO₄²⁻] leached out through decomposition of organic matter and [Mg²⁺] and [OH⁻] were supplied through addition of magnesium hydroxide and so on, and thus succeeded in synthesizing MAP having good separability over an acid fermentation reaction time of 3 hours to 7 days. That is, the present inventors have discovered a method according to which the time taken to synthesize MAP particles having good separability in sludge can be reduced to approximately one quarter of the approximately 25 days for the conventional method. As a result, MAP particles can be easily recovered from the sludge in the reaction tank 22, and hence even in the case of a facility not having sludge digestion equipment, highly efficient phosphorus recovery from sludge becomes possible.

Moreover, by carrying out a suitable degree of aeration or the like, the decomposition of organic matter in the sludge can be made to proceed as far as decomposition comprising mainly acid fermentation, and by deliberately not carrying out reaction as far as methane fermentation, a large amount of organic acids can be made to remain in the sludge; by returning sludge having reduced phosphorus and nitrogen concentrations therein due to the MAP production back into the biological water treatment step, the sludge can be used for example as a hydrogen donor in denitrification treatment or a BOD source in dephosphorization treatment. The present invention is of course very effective in facilities with no digestion tank, but is also effective in facilities where there is already a digestion tank. In this case, the MAP removal is carried out in a stage before the digestion tank, and hence a merit arises that maintenance of the digestion tank is easy. Moreover, in this case, by returning some of the sludge from the digestion tank into the reaction tank 22, the reduction in pH accompanying the acid fermentation can be mitigated.

Furthermore, for facilities not having a digestion tank, a merit also arises in that the amount of sludge can be reduced through the present invention. The outflow sludge 8 containing the MAP efficiently produced in the phosphate/ammonium ion leaching / MAP production tank 22 in this way is introduced into a MAP separation recovery apparatus 23. Here, at least approximately 95% of the MAP particles in the sludge can be recovered. As the MAP separation recovery apparatus 23, the separating apparatus described in Japanese Patent Application No. 2002-328336 or Japanese Patent Application No. 2002-326968 is preferable; a liquid cyclone, an electric sieve or screen type separator, a settling separating apparatus, a MAP washing apparatus, or a system comprising a combination thereof may also be used.

The MAP separated out and recovered using the MAP separation recovery apparatus 23 can be used as a valuable phosphorus-containing product, for example as a fertilizer raw material. Moreover, as necessary, some of the MAP can be fed back into the phosphate/ammonium ion leaching / MAP production tank 22 and thus used as seed crystals in the MAP synthesis. The MAP-separated sludge 10 from which the MAP has been removed in the MAP separation recovery apparatus 23 can be directly subjected to dewatering treatment in a sludge dewatering apparatus 24 and discharged as dewatered cake 31 as shown in FIG. 1. The filtrate 32 from the dewatering may be fed back into the initial settling basin 11 or the like.

Depending on the type of sludge, if the MAP-separated sludge 10 is led to the dewatering step as is, the dewatering performance may drop, or a large amount of a chemical such as a coagulant may be required, and the water content of the cake may increase. In such a case, some of the MAP-separated sludge 10 can be returned to the biological water treatment step 12 as shown in FIG. 2. In this case, some of the excess sludge 6 or the concentrated sludge 7 can be led into the sludge dewatering apparatus 24 (not shown). Moreover, as described earlier, for the MAP-separated sludge 10, unlike the fed back sludge in a conventional standard activated sludge treatment method, there are the merits that the phosphorus content in the liquid is greatly reduced, and moreover readily decomposable organic matter such as organic acids which are contained in abundance can be efficiently used in the biological water treatment as a hydrogen donor for denitrification treatment or a BOD source for dephosphorization treatment. Note, however, that in this case, although the sludge dewatering performance and the biological water treatment performance are improved, the MAP recovery rate tends to drop. Furthermore, in the present invention, some of the MAP-separated sludge 10 can be returned into the phosphate/ammonium ion leaching / MAP production tank 22. As a result, fine MAP particles in the sludge that could not be completely recovered fulfill the role of seed crystals, and hence there is obtained a merit whereby these fine MAP particles grow to a sufficient size before being recovered as MAP particles.

In the present invention, there is no limitation on the type of the sludge led into the sludge dewatering apparatus 24; a method in which FIG. 1 and FIG. 2 are used in combination can also be adopted. In particular, in the case that the raw water properties or sludge properties differ between summer and winter as in the case of sewage treatment, or in the case for example that the raw water properties or sludge properties fluctuate markedly due to changes in the product manufactured in the case of factory wastewater, it is a good idea to make it possible in advance for both types of operation to be carried out.

The dewatered cake 31 obtained through the dewatering in the sludge dewatering apparatus 24 may be discharged out of the system as is, or can be reduced in volume by being subjected to drying, incineration or melt processing. In particular, in the case of carrying out incineration or melt processing, the phosphorus content in the dewatered cake is reduced, and hence fly ash trouble due to the phosphorus can be avoided.

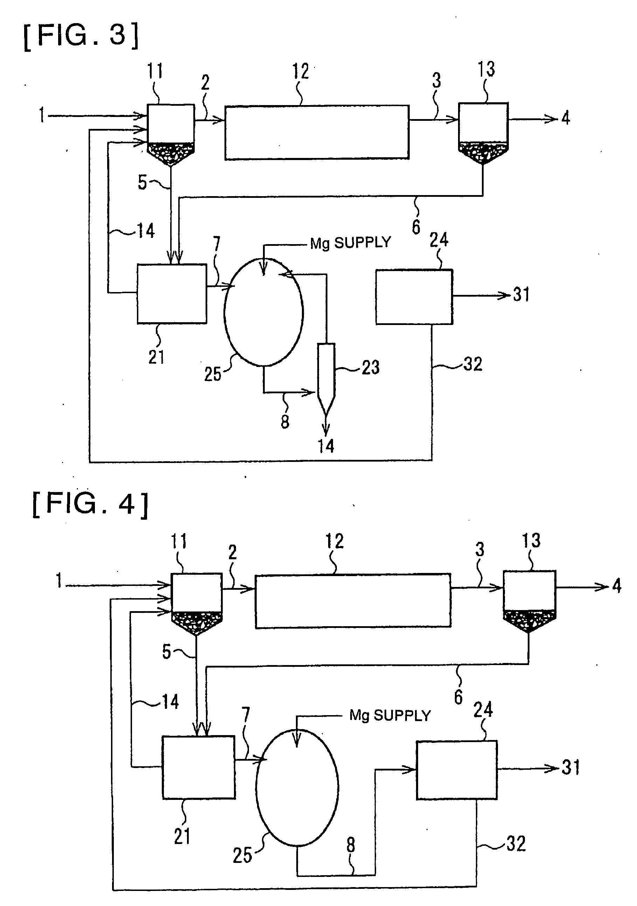

In contrast with the present invention described above, examples of conventional methods are shown in FIGS. 3 and 4. FIG. 3 is a flowchart of an embodiment described in Japanese Patent Application No. 2000-231633. Here, a MAP production tank 25 is an anaerobic digestion tank. For the anaerobic digestion tank, the residence time is very long at 25 days, and huge equipment is required, and hence there are great restrictions in terms of space and cost. Moreover, there is the problem of gases such as H₂S and CH₄ being generated, and troublesome maintenance is required. The amount that can be introduced is thus limited. Moreover, FIG. 4 is a flowchart of an embodiment of a conventional treatment apparatus. Here, the flow is such that Mg is added in the anaerobic digestion tank 25, and then the outflow sludge from the anaerobic digestion tank is introduced into the dewatering apparatus 24 without passing through a MAP separation recovery apparatus. MAP particles generated in the anaerobic digestion tank are thus not recovered but rather are mixed into the dewatered cake, and thus damage the dewatering apparatus or a conveyor through abrasion. The phosphorus concentration in the separated liquid is reduced, and hence the burden on the water treatment is lightened, but a high concentration of phosphorus is contained in the digested sludge as T-P, causing phosphorus fly ash trouble upon incineration. Moreover, with this flow, as with a method in which a coagulant such as an iron salt is added, there is a drawback that the amount of sludge generated is increased.

### EXAMPLES

Next, description will be given of examples of results of operation of experimental plants in which the wastewater treatment art of the present invention was actually incorporated. Note, however, that the present invention is not limited to the present working examples.

### Working Example 1

The present working example is an example of experiments using a pilot plant carried out using sludge from sewage treatment plant A; the flow was the same as that in FIG. 1 described earlier. Sewage treatment plant A adopts activated sludge treatment using the anaerobic-anoxic-aerobic method. In the present working example, the initially settled sludge taken from sewage treatment plant A and excess sludge were mixed together in a ratio of approximately 1:1, and the sludge was concentrated using a centrifugal concentrator. The concentrated sludge was introduced into the phosphate/ammonium ion leaching / MAP production tank 22. Regarding the tank 22, the bottom of the tank had a hopper shape, the inside of the tank was stirred using a stirrer, and sludge withdrawn from the bottom of the tank was continuously circulated back into the top of the tank, whereby MAP particles in the bottom of the tank were made to flow through the whole of the tank. The other conditions for the tank 22 were set to a hydraulic residence time of 60 hours, a water temperature of 45°, an aeration amount of 0.12 vvm, a pH of 7.3, and a MAP (hexahydrate) concentration of 1.5 g/L. The Mg source and the pH regulator introduced into the tank 22 were made to be a 35% magnesium hydroxide slurry and a sodium hydroxide solution. The method of adjusting the MAP concentration was to feed back into the tank 22 some of the concentrated MAP slurry which was concentrated using a liquid cyclone. As the MAP separating apparatus 23, a combination in series of a vibrating screen of hole size 2 mm, the liquid cyclone, and a rotating cylinder type classifier/washer was used. As the dewatering apparatus, a screw press type dewatering apparatus was used. Moreover, as a comparative example, wastewater treatment experiments were also carried out using an existing plant to which the present invention was not applied, i.e. a plant having a flow in which the initially settled sludge 5 from the initial settling basin and the excess sludge 6 from the final settling basin are dewatered without being subjected to digestion treatment, and then the separated liquid is returned into the initial settling basin 11.

The treatment results 30 days after commencement of operation are shown in Table 2. From Table 2, it can be seen that the treatment results are much better for the working example in terms in particular of T-N and T-P in the discharged water quality. Factors in this result include the reduction in the phosphorus and nitrogen loads contained in the fed back water compared with the fed back water in the conventional method, and the improvement in the efficiency of the denitrification and dephosphorization reaction for the water treatment system due to the fed back water containing a relatively large amount of organic acids. In addition, by recovering as MAP phosphorus that could not be recovered with the conventional method, it was possible to recover approximately 43% of the phosphorus in the inflowing sewage water as MAP. Moreover, the amount of sludge generated was also reduced by approximately 30% in terms of solids. This is thought to be due to some of the organic matter being solubilized in the phosphate/ammonium ion leaching / MAP production tank 22 in the method of the working example, and MAP particles being removed from the sludge. Upon returning some of the MAP-separated sludge 10 into the anaerobic tank, the phosphorus concentration in the treated water, which had been 0.2 to 0.6 mg/L, tended to drop to 0.1 to 0.4 mg/L, and hence it was verified that this sludge was used effectively as organic matter taken in by the anaerobic bacteria when releasing phosphoric acid.

[Table 2]

**TABLE 2: EXPERIMENTAL RESULTS FOR WORKING EXAMPLE 1**

| ITEM | | PLANT OF WORKING EXAMPLE | EXISTING PLANT (COMPARATIVE EXAMPLE) |
|---|---|---|---|
| INFLOWING SEWAGE WATER 1: | BOD (mg/L) | 101 ~ 205 (145) | AS LEFT |
| | SS (mg/L) | 125 ~ 260 (175) | AS LEFT |
| | T-N (mg/L) | 21 ~ 49 (31) | AS LEFT |
| | T-P (mg/L) | 3.1 ~ 5.2 (4.4) | AS LEFT |
| DISCHARGED WATER 4: | BOD (mg/L) | 3.7 ~ 7.9 (5.9) | 2.5 ~ 8.0 (6.2) |
| | SS (mg/L) | 3.7 ~ 12.0 (5.8) | 0.9 ~ 11.5 (5.9) |
| | T-N (mg/L) | 7.5 ~ 9.2 (8.3) | 8.5 ~ 15.0 (10.8) |
| | T-P (mg/L) | 0.2 ~ 0.6 (0.5) | 0.4 ~1.6 (0.7) |
| PHOSPHORUS RECOVERY RATE (%) | | 31 ~ 55 (43) | 0 |
| RELATIVE AMOUNT OF SLUDGE GENERATED (IN TERMS OF SOLIDS) | | 60 ~ 75 (69) | 100 |
| WATER CONTENT OF DEWATERED CAKE (%) | | 75.9 - 79.8 (77.6) | 74.5 - 78.8 (76.5) |

| | | | |
|---|---|---|---|
| NOTE 1) FIGURES IN BRACKETS ARE MEAN VALUES | | | |
| NOTE 2) THE PHOSPHORUS RECOVERY RATE INDICATES THE RATIO OF THE AMOUNT OF PHOSPHORUS IN THE RECOVERED MAP TO THE PHOSPHORUS LOAD IN THE INFLOWING WATER | | | |

### Working Example 2

Next, description will be given of an example of results of operation of another type of experimental plant in which the wastewater treatment art of the present invention was actually incorporated. Note, however, that the present invention is not limited to this working example. The present working example is an example of experiments using a pilot plant carried out using sludge from food wastewater treatment plant A; the flow was the same as that in FIG. 2 described earlier. Treatment plant A adopts activated sludge treatment using the anaerobic-anoxic-aerobic method as the biological water treatment step 12. In the present working example, the initially settled sludge taken from treatment plant A and excess sludge were mixed together in a ratio of approximately 2:1, and the sludge was concentrated using a gravity concentrator. The concentrated sludge was introduced into the phosphate/ammonium ion leaching / MAP production tank 22. An ultrasound treatment apparatus was installed in a sludge charging piping portion of the tank 22, and hence the concentrated sludge was charged into the phosphate/ammonium ion leaching / MAP production tank 22 after having been subjected to ultrasound treatment. Regarding the tank 22, the bottom of the tank had a hopper shape, the inside of the tank was stirred using a stirrer, and sludge withdrawn from the bottom of the tank was continuously circulated back into the top of the tank, whereby MAP particles in the bottom of the tank were made to flow through the whole of the tank. The other conditions for the tank 22 were set to a hydraulic residence time of 45 hours, a water temperature of 40°, an aeration amount of 0.15 vvm, a pH of 7.2, and a MAP (hexahydrate) concentration of 1.0 g/L. As the Mg source and the pH regulator introduced into the tank 22, and the MAP separating apparatus 23 and the dewatering apparatus 24, the same ones were used as in Working Example 1.

Moreover, as a comparative example, wastewater treatment experiments were also carried out using an existing plant to which the present invention was not applied, i.e. a plant having a flow in which the initially settled sludge 5 from the initial settling basin and the excess sludge 6 from the final settling basin are dewatered without being subjected to digestion treatment, and then the separated liquid is returned into the initial settling basin 11.

Some of the MAP-separated sludge 10 was fed back to the inlet of the anaerobic tank and the inlet of the anoxic tank among the anaerobic-anoxic-aerobic tanks 12, the respective amounts fed back being adjusted as required. The remainder of the MAP-separated sludge 10 was mixed with some of the initially settled sludge 5, and the mixture was subjected to dewatering treatment using the dewatering apparatus 24. The treatment results 30 days after commencement of operation are shown in Table 3. From Table 3, it can be seen that, as for Working Example 1, the treatment results are much better for the working example in terms in particular of T-N and T-P in the discharged water quality. Moreover, in the present working example, because the concentrated sludge is subjected to ultrasound treatment, solubilization of the sludge will proceed more than normal, and hence the amount of soluble phosphorus and nitrogen will be increased; however, most of this increased amount is recovered as MAP, and hence there was no adverse effect on the phosphorus and nitrogen concentrations in the treated water quality. It was possible to recover approximately 55% of the phosphorus in the inflowing water as MAP. Moreover, the amount of sludge generated was also reduced by approximately 35% in terms of solids. Moreover, because some of the initially settled sludge 5 was added to the MAP-separated sludge 10, the dewaterability of the sludge was improved, and hence dewaterability at least on a par with that for the dewatered cake from the existing plant could be obtained.

[Table 3]

**TABLE 3: EXPERIMENTAL RESULTS FOR WORKING EXAMPLE 2**

| ITEM | | PLANT OF WORKING EXAMPLE | EXISTING PLANT (COMPARATIVE EXAMPLE) |
|---|---|---|---|
| INFLOWING SEWAGE WATER 1: | BOD (mg/L) | 220 - 325 (260) | AS LEFT |
| | SS (mg/L) | 195 ~ 350(240) | AS LEFT |
| | T-N (mg/L) | 45 ~ 62 (53) | AS LEFT |
| | T-P (mg/L) | 5.9 ~ 11.0 (8.0) | AS LEFT |
| DISCHARGED WATER 4: | BOD (mg/L) | 8.0 ~ 16.3 (11.9) | 7.5 ~ 19.3 (12.2) |
| | SS (mg/L) | 5.7 ~ 19.0 (10.2) | 6.7 - 21.6 (10.9) |
| | T-N (mg/L) | 4.5 ~ 12.2 (8.9) | 7.9 - 25.0 (18.8) |
| | T-P (mg/L) | 0.4 ~ 1.1 (0.8) | 1.7 ~ 2.6 (1.6) |
| PHOSPHORUS RECOVERY RATE (%) | | 45 ~ 60 (55) | 0 |
| RELATIVE AMOUNT OF SLUDGE GENERATED (IN TERMS OF SOLIDS) | | 58 ~ 70 (65) | 100 |
| WATER CONTENT OF DEWATERED CAKE (%) | | 77.9 - 80.8 (79.2) | 79.5 - 82.0(80.3) |

| | | | |
|---|---|---|---|
| NOTE 1) FIGURES IN BRACKETS ARE MEAN VALUES | | | |
| NOTE 2) THE PHOSPHORUS RECOVERY RATE INDICATES THE RATIO OF THE AMOUNT OF PHOSPHORUS IN THE RECOVERED MAP TO THE PHOSPHORUS LOAD IN THE INFLOWING WATER | | | |

### Working Example 3

Next, description will be given of an example of results of operation of yet another type of experimental plant in which the wastewater treatment art of the present invention was actually incorporated. Note, however, that the present invention is not limited to this working example.

The present working example is an example of experiments using a pilot plant carried out using sludge from a wastewater treatment plant of food factory A; the flow was the same as that in FIG. 2 described earlier. The wastewater treatment plant of factory A adopts activated sludge treatment using the anaerobic-anoxic-aerobic method. In the present working example, the initially settled sludge taken from the treatment plant of factory A and excess sludge were mixed together in a ratio of approximately 2:1, and the sludge was concentrated using a gravity concentrator. The concentrated sludge was first introduced into an ozone treatment tank (not shown in FIG. 2), and was subjected to solubilization treatment using ozone, and was then introduced into the phosphate/ammonium ion leaching / MAP production tank 22. Regarding the tank 22, the bottom of the tank had a hopper shape, the inside of the tank was stirred using a stirrer, and sludge withdrawn from the bottom of the tank was continuously circulated back into the top of the tank, whereby MAP particles in the bottom of the tank were made to flow through the whole of the tank. The other conditions for the tank 22 were set to a hydraulic residence time of 45 hours, a water temperature of 40°, an aeration amount of 0.15 vvm, a pH of 7.2, and a MAP (hexahydrate) concentration of 1.0 g/L. As the Mg source and the pH regulator introduced into the tank 22, and the MAP separating apparatus 23 and the dewatering apparatus 24, the same ones were used as in Working Example 1.

Moreover, as a comparative example, wastewater treatment experiments were also carried out using an existing plant to which the present invention was not applied, i.e. a plant having a flow in which the initially settled sludge 5 from the initial settling basin and the excess sludge 6 from the final settling basin are dewatered without being subjected to digestion treatment, and then the separated liquid is returned into the initial settling basin 11.

Some of the MAP-separated sludge 10 was fed back to the inlet of the anaerobic tank and the inlet of the anoxic tank among the anaerobic-anoxic-aerobic tanks 12, the respective amounts fed back being adjusted as required. The remainder of the MAP-separated sludge 10 was mixed with some of the initially settled sludge 5, and the mixture was subjected to dewatering treatment using the dewatering apparatus 24. The treatment results 30 days after commencement of operation are shown in Table 4. From Table 4, it can be seen that, as for Working Example 1, the treatment results are much better for the working example in terms in particular of T-N and T-P in the discharged water quality. Moreover, in the present working example, because the concentrated sludge is subjected to ozone treatment, solubilization of the sludge will proceed more than normal, and hence the amount of soluble phosphorus and nitrogen will be increased; however, most of this increased amount is recovered as MAP, and hence there was no adverse effect on the phosphorus and nitrogen concentrations in the treated water quality. It was possible to recover approximately 49% of the phosphorus in the inflowing water as MAP. Moreover, the amount of sludge generated was also reduced by approximately 38% in terms of solids. Moreover, because some of the initially settled sludge 5 was added to the MAP-separated sludge 10, the dewaterability of the sludge was improved, and hence dewaterability at least on a par with that for the dewatered cake from the existing plant could be obtained.

[Table 4]

**TABLE 4: EXPERIMENTAL RESULTS FOR WORKING EXAMPLE 3**

| ITEM | | PLANT OF WORKING EXAMPLE | EXISTING PLANT (COMPARATIVE EXAMPLE) |
|---|---|---|---|
| INFLOWING WASTEWATER 1: | BOD (mg/L) | 101 ~ 205 (145) | AS LEFT |
| | SS (mg/L) | 125 ~ 260 (175) | AS LEFT |
| | T-N (mg/L) | 21 ~ 49 (31) | AS LEFT |
| | T-P (mg/L) | 3.9 ~ 6.8 (6.0) | AS LEFT |
| DISCHARGED WATER 4: | BOD (mg/L) | 3.9 ~ 10.3 (6.1) | 2.5 ~ 8.0 (6.2) |
| | SS (mg/L) | 2.1 ~ 9.3 (5.5) | 0.9 ~ 11.5 (5.9) |
| | T-N (mg/L) | 4.2 ~ 9.1 (7.4) | 8.5 ~ 15.0 (10.8) |
| | T-P (mg/L) | 0.1 ~ 0.5 (0.4) | 0.4 ~ 1.6 (0.7) |
| PHOSPHORUS RECOVERY RATE (%) | | 41 ~ 58 (49) | 0 |
| RELATIVE AMOUNT OF SLUDGE GENERATED (IN TERMS OF SOLIDS) | | 57 ~ 71 (62) | 100 |
| WATER CONTENT OF DEWATERED CAKE (%) | | 76.2 - 79.4 (77.9) | 74.5 - 78.8 (76.5) |

| | | | |
|---|---|---|---|
| NOTE 1) FIGURES IN BRACKETS ARE MEAN VALUES | | | |
| NOTE 2) THE PHOSPHORUS RECOVERY RATE INDICATES THE RATIO OF THE AMOUNT OF PHOSPHORUS IN THE RECOVERED MAP TO THE PHOSPHORUS LOAD IN THE INFLOWING WATER | | | |

### INDUSTRIAL APPLICABILITY

The present invention is useful art as a method and apparatus for efficiently recovering phosphorus and so on as magnesium ammonium phosphate crystals from wastewater containing phosphorus and nitrogen in a sewage treatment plant or any of various wastewater treatment facilities or the like.

## Claims

1. A method of treating sludge generated in an organic wastewater biological treatment process using microbial metabolism, the sludge treatment method being **characterized by** subjecting the sludge to biological treatment comprising mainly acid fermentation by facultative anaerobic bacteria so as to leach phosphate ions and ammonium ions out from the sludge, and adding a magnesium source to the sludge so as to produce magnesium ammonium phosphate particles from the leached out phosphate ions and ammonium ions, and then separating the magnesium ammonium phosphate particles from the magnesium ammonium phosphate particle-containing sludge thus produced.

2. The sludge treatment method according to claim 1, having (A) a step of leading the sludge to a dewatering step after the magnesium ammonium phosphate particles have been separated off, and/or (B) a step of returning the sludge to the organic wastewater biological treatment process after the magnesium ammonium phosphate particles have been separated off, and dewatering sludge generated in the organic wastewater biological treatment process.

3. The sludge treatment method according to claim 1 or 2, wherein the magnesium ammonium phosphate particles separated from the magnesium ammonium phosphate particle-containing sludge, or the sludge after the magnesium ammonium phosphate particles have been separated therefrom is returned to the magnesium ammonium phosphate particle production step.

4. An apparatus for treating sludge generated in an organic wastewater biological treatment process using microbial metabolism, the sludge treatment apparatus being **characterized by** comprising: a phosphate/ammonium ion leaching / magnesium ammonium phosphate production tank for subjecting the sludge to biological treatment comprising mainly acid fermentation by facultative anaerobic bacteria so as to leach phosphate ions and ammonium ions out from the sludge, and adding a magnesium source to the sludge so as to produce magnesium ammonium phosphate particles from the leached out phosphate ions and ammonium ions; and a separating apparatus for separating the magnesium ammonium phosphate particles from the magnesium ammonium phosphate particle-containing sludge produced in the phosphate/ammonium ion leaching / magnesium ammonium phosphate production tank.

5. The apparatus according to claim 4, having feeding back means for returning magnesium ammonium phosphate particle-removed sludge obtained from the separating apparatus into the phosphate/ammonium ion leaching /magnesium ammonium phosphate production tank.
